# FASCICULE DE BREVET EUROPEEN

(11) **EP 3 210 938 B1**
(45) Date de publication et mention de la délivrance du brevet: **14.11.2018**
(21) Numéro de dépôt: 17157625.9
(22) Date de dépôt: 23.02.2017
(51) Int. Cl.: B82B 3/00, G01N 15/02

(54) **DISPOSITIF DE CARACTERISATION DE PARTICULES DISPERSEES DANS UN MILIEU LIQUIDE**
VORRICHTUNG ZUR CHARAKTERISIERUG VON IN EINEM FLÜSSIGEN MEDIUM DISPERGIERTEN TEILCHEN
DEVICE FOR CHARACTERISING PARTICLES WHICH ARE DISPERSED IN A LIQUID MEDIUM

(30) Priorité: 29.02.2016 FR 1651675
(43) Date de publication de la demande: 30.08.2017
(73) Titulaire: Cordouan Technologies, 33600 Pessac (FR)
(72) Inventeur: PEDRONO, Boris, 33850 LEOGNAN (FR); JACOB, David, 33400 TALENCE (FR)
(74) Mandataire: Osha Liang

(56) Documents cités:
- US-A- 4 299 495
- US-A- 5 013 150
- DE KANTER MARTINUS ET AL: "Enabling the measurement of particle sizes in stirred colloidal suspensions by embedding dynamic light scattering into an automated probe head", MEASUREMENT, vol. 80, 2 décembre 2015 (2015-12-02), pages 92-98, XP029358647, ISSN: 0263-2241, DOI: 10.1016/J.MEASUREMENT.2015.11.024

## Description

### ETAT DE L'ART

### Domaine technique de l'invention

La présente description concerne des dispositifs de caractérisation de particules dispersées dans un milieu liquide, ainsi que des méthodes de caractérisation au moyen de tels dispositifs. Les méthodes de caractérisation s'appliquent notamment au suivi de la synthèse de nanoparticules en voie liquide.

### Etat de l'art

Les nanoparticules sont utilisées dans de nombreuses industries telles que l'industrie pharmaceutique, l'industrie cosmétique, l'industrie des matériaux, l'industrie de l'électronique, etc.

Il est connu notamment de synthétiser les nanoparticules en voie liquide, dans un réacteur, sous agitation. Les procédés de synthèse peuvent comprendre par exemple la formulation et l'émulsification, la nucléation, la croissance et l'assemblage de nano-objets, la polymérisation en nano-émulsion ou l'encapsulation. Le réacteur est généralement un récipient hermétiquement clos, qui peut être opaque, par exemple en inox, ou transparent, d'un volume intérieur généralement supérieur à 100 ml. Le réacteur est équipé généralement d'un agitateur et de sondes de mesure, par exemple pour la mesure de la température, de la viscosité, du pH ou de la conductivité. Une agitation mécanique et continue du milieu réactionnel peut être assurée par exemple par l'agitateur, à une température contrôlée. A l'inverse, le réacteur peut également être utilisé pour la dégradation de matériaux sous l'influence d'un paramètre environnemental (température, pression, éclairement, présence d'un enzyme, etc.) ou la séparation d'espèces. Au cours de la réaction, les paramètres tels que la viscosité, la turbidité, définie comme la transparence optique du milieu de réaction, ou la concentration des particules, sont amenés à évoluer.

Pour optimiser le suivi de la réaction, on cherche à contrôler certains paramètres des nanoparticules pendant la réaction, comme par exemple leur taille.

Parmi les techniques de caractérisation des nanoparticules, ou plus généralement des particules de taille micrométrique ou inférieure, on connait par exemple la diffusion dynamique de la lumière (ou DLS selon l'abréviation de l'expression anglo-saxonne « Dynamic Light Scattering ») pour la caractérisation de la taille, ou la diffusion inélastique par exemple de type Raman, ou encore la fluorescence, la diffusion de type Raman et la fluorescence étant adaptées à l'analyse de la composition moléculaire et de la structure externe. Ces techniques basées sur la diffusion de la lumière nécessitent de prélever, en cours de réaction ou en fin de réaction, un échantillon du milieu réactionnel. L'échantillon est souvent un volume représentatif du milieu liquide, prélevé par exemple au moyen d'une pipette, d'une pompe péristaltique, d'un ensemble robinet/valve ou de tout autre dispositif indépendant du réacteur. L'échantillon ainsi prélevé est amené jusqu'à un instrument d'analyse, extérieur au réacteur, pour y être caractérisé.

Cependant, le prélèvement de l'échantillon et son acheminement jusqu'à l'instrument d'analyse entraine une perte de volume car l'échantillon prélevé est un volume perdu. Le prélèvement et l'acheminement de l'échantillon rend, de plus, l'opération de caractérisation délicate et empirique car, non seulement, les conditions réactionnelles peuvent être perturbées par le prélèvement mais, en plus, il y a toujours un décalage entre les caractéristiques des particules en cours d'analyse et celles des particules dans le réacteur puisque les particules dans le réacteur continuent à évoluer pendant toute la période de prélèvement et d'analyse de l'échantillon. Par ailleurs, des prélèvements répétés conduisent à des pertes significatives du milieu de réaction.

Pour pallier ces difficultés, des méthodes permettant directement la caractérisation de particules en milieu liquide dans le réacteur ont été proposées. La déposante a ainsi mis au point une sonde d'analyse par diffusion dynamique de la lumière, appelée également sonde DLS (VASCO FLEX©), comportant une source lumineuse fibrée ainsi qu'un détecteur optique fibré, et permettant de caractériser la taille de particules dispersées dans un milieu liquide, à travers une paroi transparente du réacteur. La source lumineuse, par exemple une source laser déportée par fibre optique, envoie un faisceau lumineux vers la solution à analyser. Le détecteur optique permet la détection à un angle donné de la lumière rétrodiffusée par les particules en solution. Le traitement de la lumière rétrodiffusée permet la mesure de la taille des particules.

Cependant, avec une telle sonde DLS, la mesure peut être perturbée par les mouvements du solvant dans le réacteur du fait de l'agitation de la solution mise en oeuvre pendant la réaction, entraînant une contribution Doppler supplémentaire au mouvement des particules à qualifier par l'analyse dynamique de la lumière rétrodiffusée.

Une possibilité pour s'affranchir de ces artéfacts de mesure dans les milieux en mouvement pourrait être de compenser la contribution Doppler supplémentaire, par exemple en utilisant plusieurs sondes DLS. Ces méthodes seraient cependant complexes à mettre en oeuvre et coûteuses lorsque plusieurs sondes DLS sont mises en oeuvre.

Dans l'article de M. de Kanter et al. (« Enabling the measurement of particle sizes in stirred colloidal suspensions by embedding dynamic light scattering into an automated probe head », Measurement 80 (2016), 92 - 98), il est proposé un dispositif de caractérisation de la taille de particules en suspension au moyen d'une sonde destinée à être plongée dans le milieu liquide et qui permet de s'affranchir du mouvement du solvant. Ce dispositif comporte une source d'émission lumineuse fibrée et un détecteur optique fibré. Ce dispositif comporte en outre une sonde de mesure comprenant un compartiment pour isoler un échantillon de liquide et une tête optique DLS pour la caractérisation de la taille des particules de l'échantillon isolé dans le compartiment. Plus précisément, le compartiment est formé par une étoile à trois branches entraînée par un moteur pas à pas, ce qui permet, entre chaque mesure, d'introduire ou d'évacuer un échantillon de liquide à l'intérieur ou à l'extérieur du compartiment.

La tête de mesure optique de la sonde comprend une optique de focalisation pour la focalisation d'un faisceau lumineux d'éclairage en provenance de la source d'émission lumineuse fibrée et une optique de collection pour la collection vers le détecteur optique fibré d'un faisceau de lumière rétrodiffusée par les particules de l'échantillon.

Par rapport aux méthodes précitées qui mettraient en oeuvre plusieurs sondes DLS, le dispositif de M. de Kanter et al. présente l'avantage d'une plus grande simplicité avec une seule tête optique DLS. Cependant, le dispositif décrit nécessite la présence d'un moteur dans la sonde destinée à être plongée dans le milieu liquide, ce qui entraîne un encombrement relativement important de la sonde et des contraintes d'étanchéités pour protéger le moteur. Par ailleurs, la tête optique DLS est en contact direct avec l'échantillon de liquide, ce qui nécessite un nettoyage de la tête optique DLS entre deux applications et risque d'entrainer une pollution de la tête optique DLS au cours de la réaction.

Un objet de la présente description consiste à proposer des dispositifs de caractérisation de particules dispersées dans un milieu liquide permettant une caractérisation fiable des particules directement dans le milieu de réaction, et notamment de leur taille, en s'affranchissant des inconvénients identifiés dans l'art antérieur.

### RESUME DE L'INVENTION

Selon un premier aspect, la présente description concerne des dispositifs de caractérisation de particules dispersées dans un milieu liquide par diffusion de la lumière. Un dispositif de caractérisation selon le premier aspect comprend une source d'émission lumineuse fibrée, un détecteur optique fibré et une sonde de mesure destinée à être plongée de façon hermétique dans le milieu liquide. La sonde de mesure comprend un tube de confinement destiné à être agencé à l'intérieur de ladite sonde de mesure et à traverser de façon étanche au moins une paroi de la sonde pour recevoir, par une extrémité, un échantillon du milieu liquide ; et une tête de mesure optique destinée à être agencée à l'intérieur de ladite sonde de mesure, comprenant une optique de focalisation pour la focalisation dans le tube de confinement d'un faisceau lumineux d'éclairage en provenance de la source d'émission lumineuse et une optique de collection pour la collection vers le détecteur optique d'un faisceau de lumière rétrodiffusée par les particules dispersées dans le tube de confinement. Le dispositif de caractérisation selon le premier aspect comprend en outre une unité de traitement adaptée pour la caractérisation des particules à partir du faisceau de lumière rétrodiffusée mesuré par le détecteur optique.

Dans la présente description, le terme particules comprend des objets de taille micrométrique ou sub-micrométrique. Parmi les particules, les nanoparticules sont définies comme des nano-objets dont la moitié, pris sur un groupe de 100 nano-objets, présentent au moins une dimension inférieure à 100 nm. Les particules et nanoparticules peuvent comprendre des oxydes métalliques, des polymères, des nano-objets fonctionnalisés par des molécules actives, des cristaux, des assemblages moléculaires, des virus biologiques, des macromolécules biologiques (e.g. protéines), des quantum dots, des nanogouttes (par exemple huile dans eau ou eau dans huile), etc. Les particules et nanoparticules dispersées dans un milieu liquide peuvent former des suspensions colloïdales lorsque la dispersion est stable.

L'ensemble des dispositifs et méthodes de caractérisation décrites dans la présente demande s'applique aussi bien à la caractérisation de particules que de nanoparticules.

Par ailleurs, différents mécanismes physiques peuvent être mis en oeuvre pour générer un faisceau de lumière rétrodiffusée ; il peut s'agir par exemple de diffusion quasi-élastique de la lumière, de diffusion inélastique de la lumière, de fluorescence, etc., chacun de ces mécanismes permettant de caractériser des propriétés différentes des particules.

Plus précisément, la diffusion quasi-élastique de la lumière résulte de la diffusion du faisceau d'éclairage par les particules en mouvement dans le milieu du liquide, avec une modification négligeable de la longueur d'onde. Elle permet notamment la caractérisation de la taille des particules. Elle est mesurée par une technique dite DDL (« diffusion dynamique de la lumière ») autrement appelée DLS (abréviation de l'expression anglo-saxonne « Dynamic Light Scattering ») ou spectroscopie par corrélation de photons (« PCS »), ou encore QELS (abréviation de l'expression anglo-saxonne « Quasi Elastic Light Scattering ») ou encore spectroscopie par variation de l'intensité. La DLS comprend la détermination des variations d'intensité dans le temps du faisceau de lumière rétrodiffusée à la longueur d'onde du faisceau d'éclairage, dans une direction donnée, par exemple une direction non colinéaire avec la direction du faisceau d'éclairage.

La diffusion inélastique de la lumière résulte de la diffusion du faisceau d'éclairage par les particules, avec changement de longueur d'onde. Elle résulte par exemple de l'effet Raman. Elle permet notamment la caractérisation des particules par leur composition moléculaire et leur structure externe (conformation). Elle est mesurée par la détermination de l'intensité du faisceau de lumière rétrodiffusée a au moins une longueur d'onde du spectre optique utile différente de la longueur d'onde d'excitation.

Par rapport aux dispositifs de caractérisation connus de l'art antérieur, le dispositif selon la présente description permet non seulement une caractérisation des particules dans un milieu en mouvement, grâce au confinement de l'échantillon à analyser du reste du milieu liquide, mais permet aussi de garder une parfaite étanchéité entre le milieu liquide à analyser et la tête optique.

Le tube de confinement est transparent, au moins à la longueur d'onde du faisceau d'éclairage et à la longueur d'onde de la lumière rétrodiffusée que l'on cherche à détecter. Selon un ou plusieurs exemples de réalisation, il s'agit d'un tube en matériau transparent dans le visible, par exemple un tube en verre, en quartz, ou en plastique peu diffusant.

Le tube de confinement est par exemple un tube cylindrique, présentant une section de forme quelconque (ronde, polygonale, etc.). Le tube de confinement peut également présenter une section variable. Il peut être droit ou présenter une forme quelconque (courbe, avec des sections droites et un ou plusieurs angles, etc.).

Le tube de confinement comprend au moins une extrémité ouverte par laquelle l'échantillon de liquide est destiné à s'introduire lorsque le tube de confinement est monté traversant à travers une paroi de la sonde.

Selon un ou plusieurs exemples de réalisation, le tube de confinement est interchangeable, permettant un remplacement direct du tube entre deux mises en oeuvre du dispositif de caractérisation avec des milieux liquides différents.

Selon un ou plusieurs exemples de réalisation, le tube de confinement présente une forme et une taille standard pour facilité son interchangeabilité ; par exemple le tube de confinement est cylindrique, de section ronde.

Selon un ou plusieurs exemples de réalisation, le volume du tube de confinement est inférieur à 500 µL, avantageusement inférieur à 300 µL, avantageusement inférieur à 100 µL. Le volume d'échantillon nécessaire pour l'analyse est en effet réduit, typiquement inférieure à 300 µL, voir inférieur à 100 µL. Un tube de prélèvement de faible volume limite l'encombrement de la sonde de mesure.

Par exemple, un tube de prélèvement cylindrique, de diamètre interne inférieur à 2 mm, de diamètre externe inférieur à 3 mm et de hauteur inférieure à 30 mm permet de former un volume total inférieur à 375µL pour un volume utile d'échantillon inférieur à 250µL.

Selon un ou plusieurs exemples de réalisation, la sonde de mesure présente une enveloppe extérieure sensiblement cylindrique avec un diamètre inférieur ou égal à 1" (2,54 cm) et une longueur de 10 cm à 20 cm par exemple, la longueur dépendant de la taille du réacteur.

Selon un ou plusieurs exemples de réalisation, la sonde de mesure présente une enveloppe extérieure sensiblement cylindrique avec un diamètre inférieur à 12 mm.

Selon un ou plusieurs exemples de réalisation, le dispositif de caractérisation comprend en outre un dispositif d'aspiration contrôlée, adapté pour aspirer l'échantillon de milieu liquide dans le tube de confinement et évacuer l'échantillon de milieu liquide hors du tube de confinement. Le dispositif d'aspiration contrôlée permet l'introduction et l'évacuation de l'échantillon de liquide, notamment lorsque le tube de confinement est destiné à traverser une paroi de la sonde de mesure par une seule de ses extrémités.

Selon un ou plusieurs exemples de réalisation, le dispositif d'aspiration est un dispositif d'aspiration par dépression, qui peut être installé en dehors de la sonde de mesure, à distance du tube de confinement, permettant de limiter l'encombrement de la sonde de mesure. Par exemple, le dispositif d'aspiration contrôlée comprend une seringue, une pompe à vide, une pompe péristaltique, une poire d'aspiration.

Selon un ou plusieurs exemples de réalisation, le tube de confinement est destiné à traverser une paroi inférieure de la sonde de mesure de façon sensiblement verticale, facilitant son insertion de façon étanche à travers la paroi de la sonde de mesure. Bien que la forme du tube puisse être quelconque, selon un ou plusieurs exemples de réalisation, le tube de confinement est droit, ce qui facilité son interchangeabilité.

Selon un ou plusieurs exemples de réalisation, et notamment lorsque le tube de confinement comprend au moins un tronçon sensiblement vertical, la tête de mesure optique comprend un élément de déflexion du faisceau d'éclairage vers le tube de confinement et du faisceau de lumière rétrodiffusée vers l'optique de collection.

Selon un ou plusieurs exemples de réalisation, l'élément de déflexion comprend une lame séparatrice, un miroir ou un prisme à réflexion totale.

Selon un ou plusieurs exemples de réalisation, l'élément de déflexion comprend un séparateur sélectif en longueur d'onde (par exemple une lame dichroïque) pour la séparation des faisceaux d'éclairage et rétrodiffusé dans le cas d'analyse de la diffusion avec changement de longueur d'onde.

Selon un ou plusieurs exemples de réalisation, l'élément de déflexion est mobile, permettant l'ajustement de la distance de focalisation du faisceau d'éclairage dans le tube de confinement.

Selon un ou plusieurs exemples de réalisation, le tube de confinement est destiné à traverser une paroi latérale de la sonde de mesure de façon étanche par ses deux extrémités. Cet exemple de réalisation permet notamment de s'affranchir d'un dispositif d'aspiration en utilisant le flux présent dans le milieu liquide pour remplir le tube de confinement.

Dans cet exemple, bien que le tube de confinement puisse avoir une forme quelconque et une orientation quelconque à l'intérieur de la sonde de mesure, il peut être droit pour faciliter son interchangeabilité. Par ailleurs, son inclinaison peut être adaptée pour faciliter son remplissage. Selon un ou plusieurs exemples de réalisation, le tube de confinement est destiné à être monté de façon sensiblement horizontale à l'intérieur de la sonde de mesure.

Selon un ou plusieurs exemples de réalisation, l'optique de focalisation et l'optique de collection comprennent une lentille à focale variable permettant l'ajustement de la distance de focalisation du faisceau d'éclairage dans le tube de confinement.

Selon un ou plusieurs exemples de réalisation, l'optique de focalisation et l'optique de collection sont formées d'une même optique, adaptée pour recevoir les faisceaux d'éclairage et de lumière rétrodiffusée.

Selon un ou plusieurs exemples de réalisation, lorsque les faisceaux d'éclairage et de lumière rétrodiffusée sont destinés, en fonctionnement, à se propager selon des directions non colinéaires, lesdits faisceaux peuvent traverser l'optique commune de focalisation et de collection à deux endroits différents de l'optique, l'un des faisceaux pouvant par exemple traverser l'optique en son axe.

Selon un ou plusieurs exemples de réalisation, les optiques de focalisation et de collection comprennent une lentille à focale variable permettant l'ajustement de la distance de focalisation du faisceau d'éclairage dans le tube de confinement.

Selon un deuxième aspect, la présente description concerne un procédé de caractérisation de particules dispersées dans un milieu liquide au moyen d'un dispositif de caractérisation selon le premier aspect.

Selon un ou plusieurs exemples de réalisation, le procédé de caractérisation comprend les étapes suivantes:
(a1) immersion de la sonde de mesure dans le milieu liquide;
(a2) introduction d'un échantillon du milieu liquide à l'intérieur du tube de confinement ;
(a3) focalisation d'un faisceau d'éclairage émis par la source d'émission lumineuse dans l'échantillon;
(a4) détection du faisceau de lumière rétrodiffusée au moyen du détecteur optique et caractérisation des particules; et
(a5) libération de l'échantillon dans le milieu liquide.

Selon un ou plusieurs exemples de réalisation, le volume d'échantillon introduit est inférieur à 300 µL, avantageusement inférieur à 100 µL.

Selon un ou plusieurs exemples de réalisation, l'étape (a4) de détection du faisceau de lumière rétrodiffusée et de caractérisation des particules comprend l'analyse dynamique de la lumière rétrodiffusée (DLS) pour la caractérisation de la taille des particules.

Selon un ou plusieurs exemples de réalisation, l'étape (a4) de détection du faisceau de lumière rétrodiffusée et de caractérisation des particules comprend l'analyse statique de la lumière rétrodiffusée à une longueur d'onde différente de la longueur d'onde du faisceau d'éclairage ; ce type d'analyse permet par exemple la caractérisation de la composition moléculaire et/ou de la structure externe des particules grâce à l'analyse de la diffusion Raman ou de la fluorescence.

Selon un ou plusieurs exemples de réalisation, l'opération (a2) d'introduction de l'échantillon du milieu liquide comprend l'aspiration contrôlée du milieu liquide dans le tube de confinement, au moyen d'un dispositif d'aspiration.

Selon un ou plusieurs exemples de réalisation, lorsque le tube de confinement traverse de manière étanche une paroi latérale de la sonde de mesure par ses deux extrémités, l'opération (a2) d'introduction de l'échantillon du milieu liquide comprend:
- la rotation de la sonde de mesure dans une première position de façon à ce que le tube de confinement se trouve dans une direction sensiblement parallèle à un flux dans le milieu liquide, permettant le remplissage du tube de confinement; et
- une fois le tube de confinement rempli, la rotation de la sonde de mesure dans une deuxième position de façon à ce que le tube de confinement se trouve dans une direction sensiblement perpendiculaire au flux dans le milieu liquide.

Selon un ou plusieurs exemples de réalisation, le procédé de caractérisation comprend en outre l'adaptation de la distance de focalisation du faisceau d'éclairage dans l'échantillon en fonction de la concentration et/ou de l'absorption des particules du milieu liquide.

Selon un ou plusieurs exemples de réalisation, le procédé de caractérisation selon la présente description est appliqué au suivi de la synthèse de nanoparticules. Il peut comprendre la répétition des opérations (a2) à (a5) pendant la synthèse des nanoparticules.

### BREVE DESCRIPTION DES DESSINS

D'autres avantages et caractéristiques de l'invention apparaîtront à la lecture de la description, illustrée par les figures suivantes :
- La figure 1 représente une vue schématique générale d'un exemple de dispositif de caractérisation de particules dispersées dans un milieu liquide, selon la présente description ;
- Les figures 2A, 2B et 2C représentent des vues schématiques d'un exemple de sonde de mesure d'un dispositif de caractérisation selon la présente description, pendant différentes phases d'un procédé de caractérisation de particules dispersées dans un milieu liquide, selon la présente description;
- Les figures 3A, 3B et 3C représentent des vues schématiques d'exemples de réalisation d'une sonde de mesure d'un dispositif de caractérisation selon la présente description ;
- Les figures 4A, 4B, 4C et 4D représentent des vues schématique de coté et de dessus d'un autre exemple de sonde de mesure d'un dispositif de caractérisation selon la présente description, pendant différentes phases d'un procédé de caractérisation selon la présente description ;
- Les figures 5A, 5B et 5C représentent des vues schématiques d'autres exemples de réalisation d'une sonde de mesure d'un dispositif de caractérisation selon la présente description.

### DESCRIPTION DETAILLEE

Sur les figures, les éléments identiques sont repérés par les mêmes références. Pour des questions de lisibilité des figures, les échelles de taille entre éléments représentés ne sont pas respectées.

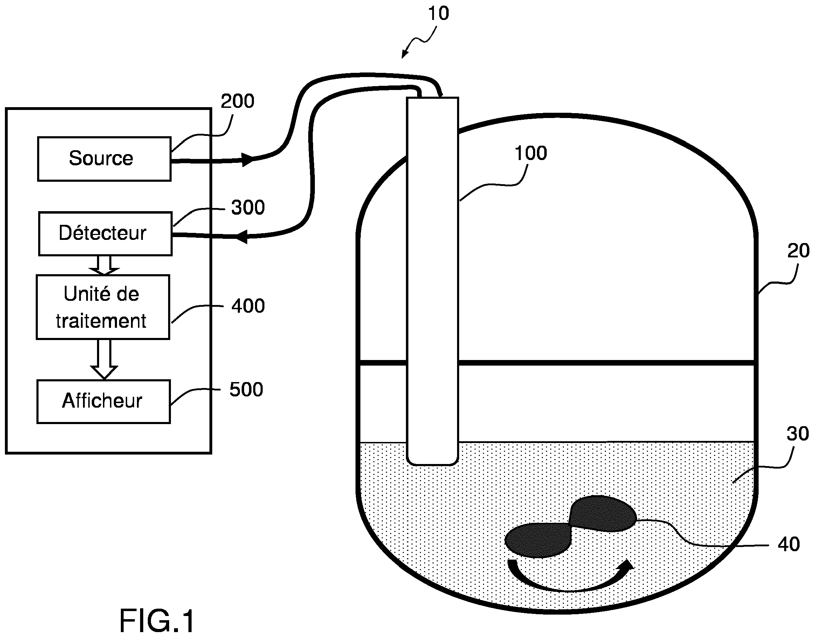

La figure 1 représente de façon schématique un réacteur 20 contenant un milieu liquide 30 dans lequel est plongé partiellement le dispositif 10 de caractérisation selon la présente description. Le milieu liquide 30 contenu dans le réacteur 20 contient des particules dispersées dans le milieu liquide, par exemple des particules en suspension, et peut, pour certaines applications, être maintenu en agitation par un agitateur 40. L'agitateur 40 peut être de type mécanique ou magnétique ; il peut être entraîné par un axe mécanique, ou par un dispositif magnétique agencé à l'extérieur dudit réacteur, et assurer une agitation continue ou intermittente du milieu liquide.

Le dispositif 10 de caractérisation comporte une sonde de mesure 100 adaptée pour être plongée au moins en partie dans le milieu liquide 30, ainsi qu'une source d'émission lumineuse 200 et un détecteur optique 300.

La source d'émission lumineuse 200, appelée par la suite source lumineuse, peut être par exemple une source laser à une longueur d'onde donnée. La source lumineuse 200 est apte à émettre un faisceau d'éclairage, par exemple un faisceau laser, qui est transmis par fibre optique dans la sonde de mesure 100 pour éclairer un échantillon du milieu liquide. La source lumineuse 200 est dite « fibrée ».

Le détecteur optique 300, appelé par la suite simplement détecteur, est apte à détecter un faisceau de lumière rétrodiffusée par un échantillon du milieu liquide; le faisceau de lumière rétrodiffusée, ou « faisceau rétrodiffusé » est collecté par la sonde de mesure 100 et transmis par fibre optique depuis la sonde de mesure 100 jusqu'au détecteur 300 qui est dit « fibré ». Le détecteur 300 peut être par exemple un détecteur optique à comptage de photons, du type tube photomultiplicateur ou photodiode à avalanche.

Les fibres optiques reliant optiquement, d'une part, la source lumineuse 200 et la sonde de mesure 100 et, d'autre part, le détecteur 300 et ladite sonde de mesure 100 peuvent comprendre par exemple, des fibres monomodes ou multimodes, ou des paquets de fibres monomodes ou multimodes, par exemple des fibres à maintien de polarisation.

Le détecteur 300 est électriquement connecté à une unité de traitement 400 qui réalise la caractérisation des particules présentes dans un échantillon du milieu liquide à partir du faisceau de lumière rétrodiffusée détecté par le détecteur 300.

Dans le cas par exemple d'analyse dynamique de la lumière diffusée (DLS), l'unité de traitement analyse les variations de l'intensité du faisceau de lumière rétrodiffusée dans le temps pour en déduire des distributions de tailles. L'unité de traitement peut comprendre, par exemple, une sous-unité de corrélation et une sous unité de calcul pour calculer la taille des particules. Dans certains exemples, la sous-unité de corrélation peut être réalisée par un corrélateur spécifique.

Dans le cas d'analyse statique de la lumière diffusée, par exemple par diffusion inélastique de la lumière, l'unité de traitement peut déterminer à partir du spectre optique du faisceau de lumière rétrodiffusée, ou de l'intensité du faisceau de lumière diffusée à au moins une longueur d'onde du spectre, la composition moléculaire et la structure externe des particules.

Les caractéristiques des particules obtenues par caractérisation, par exemple leur taille, peuvent être ensuite affichées sur un afficheur 500 connecté à l'unité de traitement 400.

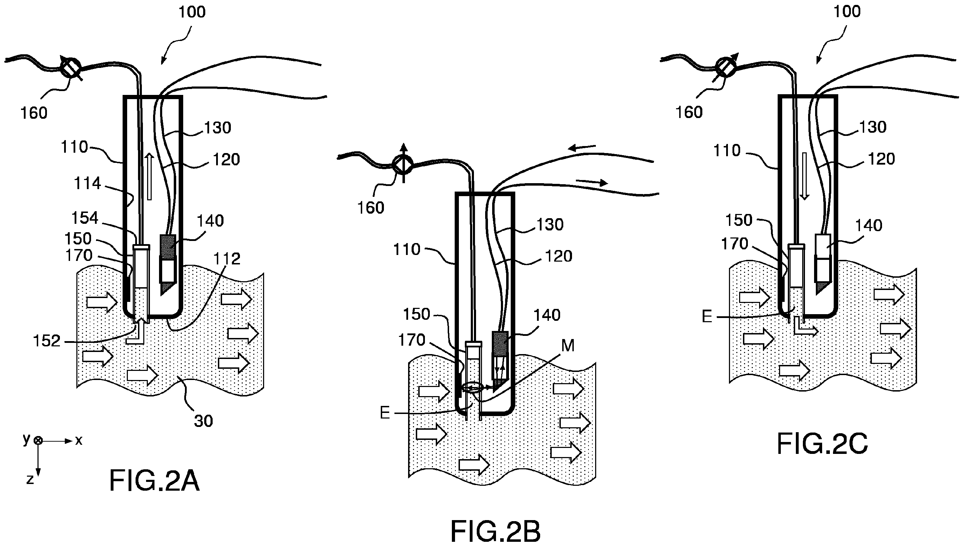

Un exemple de sonde de mesure 100 est représenté schématiquement sur les figures 2A, 2B et 2C. Dans cet exemple, la sonde de mesure 100 comporte une enceinte 110 étanche, avantageusement chimiquement inerte, à l'intérieur de laquelle sont montés un tube de confinement 150 et une tête de mesure optique 140. L'enceinte 110 de la sonde de mesure 100 est dans cet exemple fermée. La tête de mesure optique 140 est reliée à la source lumineuse 200 et au détecteur 300, respectivement, par des fibres optiques 120 et 130.

Le tube de confinement 150 est adapté pour recevoir un échantillon E du milieu liquide 30. Le tube de confinement 150 est par exemple cylindrique, avec une section quelconque, par exemple ronde ou polygonale. La section du tube de confinement a une dimension transversale de préférence comprise entre 0.1 et 5 mm. Le tube de confinement présente une paroi transparente optiquement, avantageusement chimiquement inerte, par exemple en verre.

Le tube de confinement 150 comprend au moins une extrémité ouverte, dite extrémité débouchante, destinée à traverser de façon étanche une paroi de la sonde de mesure, et par laquelle le liquide du milieu 30 peut s'introduire dans le tube. Dans le cas d'un tube de confinement avec une seule extrémité débouchante, le liquide est également amené à s'évacuer par ladite extrémité. Dans certains exemples de réalisation, les deux extrémités du tube de confinement peuvent être débouchantes, comme cela sera décrit par la suite ; dans ce cas, le liquide du milieu 30 peut s'introduire dans le tube par une des extrémités et s'évacuer par l'autre extrémité. Ainsi, la/les extrémité(s) débouchante(s) du tube de confinement débouche(nt) dans le milieu liquide 30 tandis que la portion centrale du tube de confinement est enfermée hermétiquement dans la sonde de mesure.

Le tube de confinement 150 forme ainsi une chambre de mesure fermée dans laquelle un échantillon du milieu liquide peut être isolé dudit milieu liquide pour y être caractérisé sans subir l'agitation éventuelle du milieu liquide. Cet échantillon étant puisé directement dans le milieu liquide et maintenu en confinement dans le tube de confinement, il peut être analysé, ou caractérisé, en temps réel, sans ouverture du réacteur ou arrêt de l'agitation et sans interruption de la réaction du milieu liquide.

Par ailleurs, comme l'enceinte 110 de la sonde de mesure est étanche, la tête de mesure optique reste parfaitement isolée de toute projection de liquide provenant du milieu liquide 30 ou de l'échantillon à analyser. Il n'est ainsi pas nécessaire de la nettoyer entre deux caractérisations de milieux liquides différents.

Dans certains exemples de réalisation, le tube de confinement 150 peut être interchangeable, c'est-à-dire que le tube, dans la sonde de mesure, est changé à chaque nouvelle caractérisation d'un nouveau milieu liquide. L'interchangeabilité du tube de confinement permet un entretien et une maintenance aisés du dispositif.

Selon un ou plusieurs exemples de réalisation, le dispositif de caractérisation comprend un piège optique 170 représenté schématiquement par un rectangle noir sur la figure 2B ; le piège optique permet d'absorber la lumière transmise par l'échantillon afin d'éviter les réflexions parasites qui peuvent gêner l'analyse de la lumière rétrodiffusée.

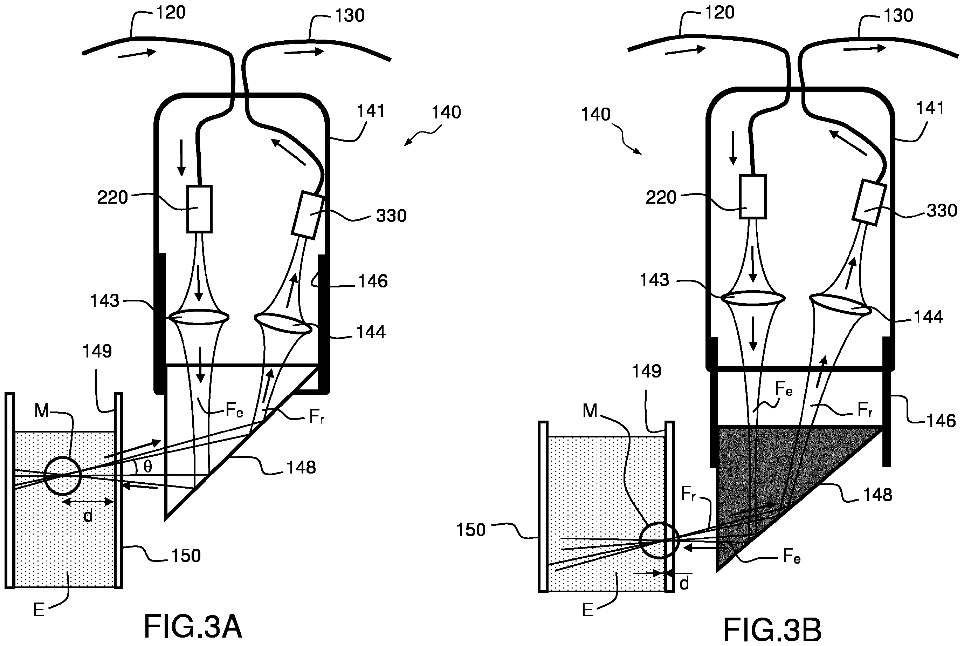

Selon un exemple de réalisation illustré sur les figures 2A à 2C et 3A à 3C, le tube de confinement présente une seule extrémité débouchante 152 qui traverse une paroi de l'enceinte 110 de la sonde de mesure. A l'opposé, l'extrémité supérieure 154 du tube de confinement 150 peut être fermée. L'extrémité supérieure 154 est reliée à un dispositif d'aspiration 160 permettant l'aspiration et l'évacuation de l'échantillon de liquide, respectivement, dans et hors du tube de confinement 150. Dans un ou plusieurs exemples de réalisation, le dispositif d'aspiration est un dispositif d'aspiration par dépression, qui présente l'avantage d'être simple et fiable et peut être installé en dehors de la sonde de mesure, à distance du tube de confinement. Le dispositif d'aspiration 160 peut être, par exemple, une pompe à vide, une seringue ou tout autre dispositif apte d'une part, à aspirer une quantité prédéterminée de liquide dans le tube de confinement et, d'autre part, à purger l'échantillon en évacuant le liquide hors du tube.

Les figures 2A à 2C illustrent selon un exemple des étapes d'un procédé de caractérisation de particules dispersées dans le milieu liquide 30. La caractérisation des particules est obtenue par analyse de la lumière rétrodiffusée par l'échantillon de liquide confiné dans le tube de confinement 150. L'échantillon de liquide à analyser peut être obtenu suivant le procédé schématisé sur les figures 2A, 2B et 2C :
- figure 2A : La sonde de mesure 100 est plongée dans le réacteur 20 et un échantillon de liquide E est introduit dans le tube de confinement 150 depuis l'extrémité inférieure 152 dudit tube, par une aspiration générée par le dispositif d'aspiration 160 ; l'aspiration est contrôlée de telle sorte que la hauteur de l'échantillon dans le tube de confinement soit suffisante pour que la zone de mesure se trouve dans l'échantillon ;
- figure 2B : l'échantillon E est confiné dans le tube de confinement 150. L'analyse du faisceau de lumière rétrodiffusée peut alors être réalisée pour caractériser les particules présentes dans l'échantillon;
- figure 2C : une fois la caractérisation des particules contenues dans l'échantillon de liquide E terminée, l'échantillon de liquide est évacué hors du tube de confinement 150, grâce au dispositif d'aspiration 160.

Un nouvel échantillon de liquide peut alors être introduit dans le tube de confinement 150 pour une nouvelle caractérisation. Plusieurs caractérisations peuvent ainsi se succéder, permettant de fournir une évolution, en temps réel, des caractéristiques des particules du milieu liquide. Des caractérisations successives peuvent être réalisées jusqu'à ce que les caractéristiques mesurées des particules correspondent à des caractéristiques prédéterminées. Dans le cas d'une synthèse de nanoparticules par exemple, les caractérisations peuvent se succéder jusqu'à ce que la taille mesurée des nanoparticules corresponde à la taille désirée. Dans le cas d'une séparation de particules, les caractérisations peuvent se succéder jusqu'à ce que la séparation des particules soit obtenue.

Les figures 3A-3C illustrent plus en détails des exemples de sondes de mesure 100 dans lesquels le tube de confinement 150 présente au moins une portion sensiblement verticale. Par portion « sensiblement verticale », on entend une portion qui s'étend dans une direction plus ou moins parallèle à l'axe de l'enceinte 110 de la sonde de mesure, c'est-à-dire suivant une direction générale Z, dans le repère (X,Y,Z) de la figure 2A, avec un angle de débattement par rapport à la verticale inférieur à +/-0.5°.

Le tube de confinement peut présenter par exemple des parties coudées et avoir une extrémité débouchante qui traverse une paroi latérale de la sonde de mesure. Selon un ou plusieurs exemples de réalisation, le tube de confinement est un tube droit, agencé de façon sensiblement verticale dans la sonde de mesure, dans cet exemple sensiblement parallèle à l'axe optique de l'optique de focalisation, et présente une extrémité débouchante 152 qui traverse une paroi inférieure 112 de l'enceinte 110 de la sonde de mesure, comme cela est représenté sur les figures 2A à 2C. Cet agencement particulier permet notamment de réduire la quantité de volume prélevé et permet une optimisation de l'encombrement à l'intérieur de la sonde de mesure, ce qui permet d'en réduire le volume extérieur.

La sonde de mesure 100 illustrée sur les figures 3A à 3C comprend une tête de mesure optique 140 et un tube de confinement 150 dont seule une portion centrale, verticale, est représentée ici.

Dans l'exemple de la figure 3A, la tête de mesure optique 140 comprend une tête d'émission lumineuse 220 pour l'émission d'un faisceau d'éclairage Fe, la tête d'émission lumineuse 220 recevant le faisceau lumineux émis par la source lumineuse 200 grâce à la fibre optique 120. La tête d'émission lumineuse 220 peut être formée simplement de l'extrémité de la fibre optique 120 ou comprendre une optique de mise en forme (non représentée). La tête de mesure optique 140 comprend également une tête de réception 330 pour la réception du faisceau Fr de lumière rétrodiffusée et la transmission au détecteur 300 grâce à la fibre optique 130. La tête de réception peut, là encore, comprendre une optique de mise en forme pour envoyer le faisceau Fr de lumière rétrodiffusée sur la face d'entrée de la fibre optique 130.

La tête de mesure optique 140 comprend également une optique de focalisation 143 pour la focalisation du faisceau d'éclairage Fe dans l'échantillon E, une optique de collection 144 pour la collection du faisceau Fr de lumière rétrodiffusée par les particules dispersées dans l'échantillon E et un élément de déflexion 148 qui permet dans cet exemple de défléchir les faisceaux d'éclairage et de lumière rétrodiffusée afin respectivement d'éclairer l'échantillon et de collecter la lumière rétrodiffusée dans le cas où le tube de confinement est agencé de façon sensiblement parallèle aux axes optiques des optiques de focalisation et/ou de collection. Les optiques de focalisation 143 et de collection 144 peuvent comprendre une lentille ou un groupe de lentilles. L'élément de déflexion 148 peut comprendre un miroir, une lame de verre ou un prisme de renvoi, par exemple un prisme à réflexion totale, comme cela est illustré dans l'exemple de la figure 3A.

Comme représenté par les flèches sur la figure 3A, l'élément de déflexion 148 réfléchit le faisceau d'éclairage Fe vers une zone de mesure M du tube de confinement 150. Au point de focalisation du faisceau d'éclairage Fe dans l'échantillon de liquide E, la lumière reçue par l'échantillon est diffusée par les particules dispersées dans l'échantillon liquide, que ce soit une diffusion dite quasi-élastique de la lumière (sans changement de longueur d'onde) ou une diffusion inélastique de la lumière, par exemple par effet Raman (à une longueur d'onde plus grande). Le faisceau de lumière rétrodiffusée Fr est défini par le faisceau de lumière réfléchi par l'élément de déflexion 148 et collecté par l'optique de collection 144. Il est possible ainsi en agençant les positions relatives des optiques d'éclairage 143 et de collection 144 ainsi que leurs axes optiques de régler l'angle entre le faisceau d'éclairage et le faisceau de lumière rétrodiffusée. Ainsi dans l'exemple des figures 3A et 3B, les axes optiques des optiques d'éclairage 143 et de collection 144 présentent un angle non nul permettant d'analyser la lumière rétrodiffusée dans une direction non colinéaire avec la direction du faisceau d'éclairage. Par exemple, le faisceau de lumière rétrodiffusée présente un angle compris entre 90° et 175° dans les cas où l'on cherche à mesure la diffusion quasi-élastique de la lumière (DLS), cet angle permettant d'éviter les réflexions parasites paraxiales et de conserver un mode d'interférence d'auto-battement (et non un battement à 2 ondes).

Selon un ou plusieurs exemples de réalisation, la tête optique peut comprendre un séparateur sélectif en longueur d'onde pour la séparation des faisceaux d'éclairage et rétrodiffusé dans le cas d'analyse de la diffusion avec changement de longueur d'onde. Par exemple, il peut s'agir d'une lame dichroïque agencée sur l'élément de déflexion 148. Il est également possible de prévoir un filtre rejécteur de fluorescence, de type filtre passe bande, pour couper la lumière de fluorescence lorsqu'on cherche à caractériser un autre type de diffusion, par exemple la diffusion de type Raman.

Selon un ou plusieurs exemples de réalisation, l'élément de déflexion 148 est mobile en translation suivant une direction parallèle à l'axe optique de l'optique de focalisation et/ou de collection. Cette mobilité de l'élément de déflexion 148 peut être obtenue, par exemple, au moyen d'un dispositif mécanique coulissant 146, tel qu'une paire de glissières montées sur la paroi 141 de la tête de mesure optique 140 et entre lesquelles est fixé l'élément de déflexion 148. La mobilité de l'élément de déflexion 148 permet un ajustement de la distance de travail d entre la zone de mesure M (où est focalisé le faisceau d'éclairage Fe dans l'échantillon de liquide E) et la face interne 149 de la paroi du tube de confinement. Il est ainsi possible d'adapter l'emplacement de la zone de mesure M à la concentration et à l'absorption de l'échantillon, liée à la concentration en particules de l'échantillon de liquide.

Ainsi, dans un exemple de réalisation, la distance de travail peut être ajustée dans une plage allant de 0 à 5 mm par translation de l'élément de déflexion 148. Dans le cas d'une opération de synthèse de particules par exemple, la distance de travail d pourra être choisie plus grande par exemple en début d'opération de synthèse, quand le liquide est peu concentré en particules (figure 3A) et pourra être choisie plus courte par exemple en fin d'opération de synthèse, quand le milieu liquide est très concentré et opaque (figure 3B). Autrement dit, lorsque la solution à analyser est turbide, la distance de travail est choisie courte, c'est-à-dire que la zone de mesure M est choisie proche de la paroi 149 du tube de confinement 150 pour que le faisceau Fr de lumière rétrodiffusée ne soient pas altéré par la multidiffusion due à la turbidité du liquide présent entre la zone de mesure M et la paroi du tube de confinement et le signal détecté suffisant. Ces exemples de réalisation permettent donc une adaptabilité à tous les milieux liquides, qu'ils soient dilués ou partiellement turbides ou opalescents.

L'ajustement de la distance de travail d peut également être obtenu au moyen d'optiques d'éclairage 143 et de collection 144 à focale variable.

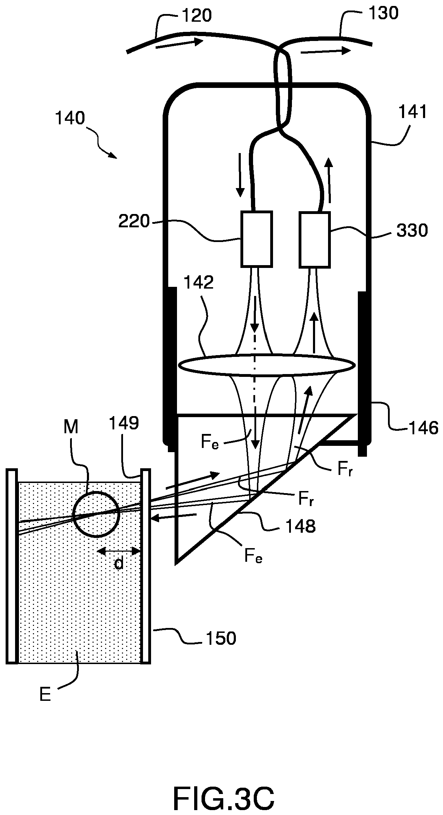

La figure 3C illustre une variante des figures 3A et 3B dans laquelle l'optique de focalisation et l'optique de collection sont formées par une optique commune 142, les autres éléments étant inchangés. Ainsi, l'optique commune 142 assure à la fois la focalisation du faisceau d'éclairage Fe et la collection du faisceau de lumière rétrodiffusée Fr.

Selon un exemple de réalisation illustré sur la figure 3C, les têtes optiques d'émission 220 et de réception 330 sont agencées de telle sorte que les faisceaux Fe d'éclairage et Fr de lumière rétrodiffusée sont incidents de façon décalée sur l'optique commune 142, l'un des deux faisceaux étant incident par exemple sur l'axe optique de l'optique commune 142 et l'autre excentré. Cette configuration permet de détecter, avec une optique commune 142, un faisceau Fr de lumière rétrodiffusée non colinéaire avec le faisceau d'éclairage. Cette configuration permet également de détecter des faisceaux Fe d'éclairage et Fr de lumière rétrodiffusée colinéaires en utilisant par exemple un système polarimétrique type isolateur optique, qui permet de séparer les polarisations.

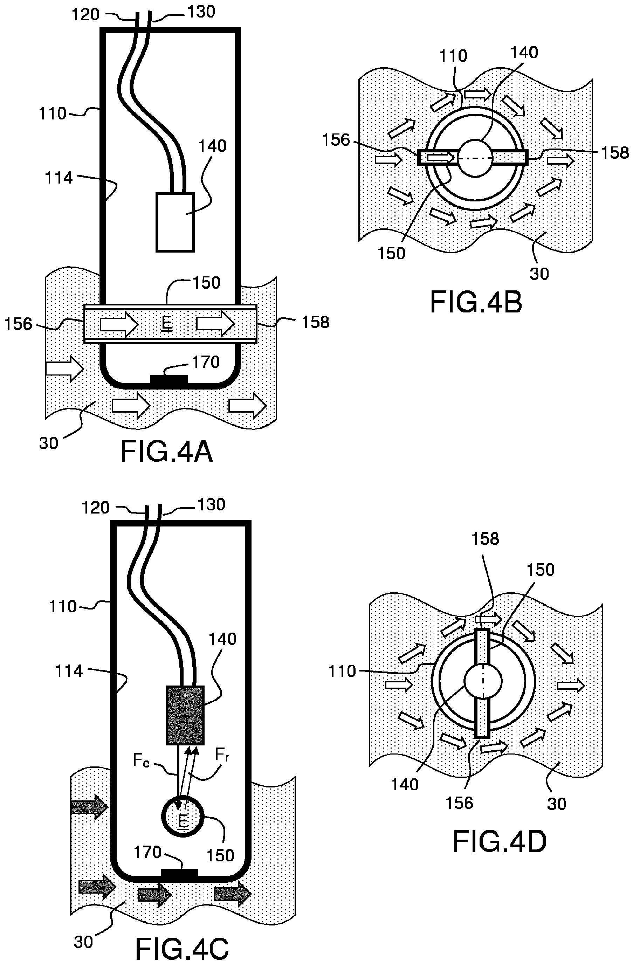

Les figures 4A à 4D illustrent un autre exemple de réalisation d'une sonde de mesure d'un dispositif de caractérisation selon la présente description dans laquelle le tube de confinement 150 présente deux extrémités débouchantes dans la paroi latérale 114 de l'enceinte 110 de la sonde de mesure 100.

Dans l'exemple illustré sur les figures 4A - 4D, le tube de confinement 150 est droit et agencé dans la sonde de mesure de façon sensiblement horizontale, c'est-à-dire présentant un angle d'inclinaison avec l'horizontale de ±0.5°. Cependant, il pourrait présenter d'autres formes et/ou présenter une inclinaison non nulle avec la direction horizontale.

Dans l'exemple illustré sur les figures 4A à 4D, le remplissage du tube de confinement 150 peut être obtenu en positionnant la sonde de mesure de telle sorte que le tube de confinement 150 se trouve dans la direction du flux de liquide généré par l'agitateur 40 et schématisé par des doubles flèches sur les figures 4A-4D. Ce positionnement de la sonde de mesure correspond à une première position montrée selon une vue de coté en coupe sur la figure 4A et montrée selon une vue de dessus en coupe sur la figure 4B. Une fois l'échantillon de liquide E introduit dans le tube de confinement 150, la sonde de mesure est déplacée angulairement dans une deuxième position de façon à ce que le tube de confinement ne soit pas dans la direction du flux de liquide généré par l'agitateur. Comme montré sur les figures 4C et 4D, la deuxième position de la sonde de mesure peut être approximativement perpendiculaire à la première position. Dans cette deuxième position, l'échantillon de liquide à l'intérieur du tube de confinement est isolé de l'agitation du milieu liquide 30 car, l'extrémité débouchante 156 du tube étant perpendiculaire à la direction du flux du liquide, le liquide à l'intérieur du tube ne subit plus le mouvement du milieu liquide. Lorsque la caractérisation de l'échantillon E est terminée, l'échantillon confiné peut être évacué du tube de confinement en déplaçant à nouveau la sonde de mesure dans la première position, le flux de liquide du milieu 30 poussant le liquide confiné hors du tube de confinement. Un nouvel échantillon de liquide peut alors être analysé. Cet exemple de réalisation présente l'avantage de ne nécessiter aucun matériel pour aspirer et évacuer le liquide dans/hors du tube de confinement.

Comme expliqué précédemment, plusieurs caractérisations peuvent se succéder, fournissant une évolution, en temps réel, des caractéristiques des particules du milieu liquide. Un opérateur peut donc par exemple, suivre en temps réel le résultat de la réaction dans le milieu liquide 30 depuis la mise en contact des réactants jusqu'à la fin de la réaction.

Bien entendu, dans certains exemples de réalisation (non représentés sur les figures), seule une extrémité 156 du tube de confinement 150 peut être ouverte et traverser une paroi latérale 114 de l'enceinte 110 de la sonde de mesure pour déboucher dans le milieu liquide 30. Dans ces exemples de réalisation, l'extrémité non débouchante 158 est reliée à un dispositif d'aspiration permettant l'aspiration et l'évacuation de l'échantillon de liquide E, respectivement dans et hors du tube de confinement 150, comme expliqué précédemment en relation avec les figures 2A-2C.

Selon un ou plusieurs exemples de réalisation, le dispositif de caractérisation comprend comme dans les exemples précédents un piège optique 170 représenté schématiquement par un rectangle noir sur la figure 4A ou 4C ; le piège optique permet d'absorber la lumière transmise par l'échantillon afin d'éviter les réflexions parasites qui peuvent gêner l'analyse de la lumière rétrodiffusée.

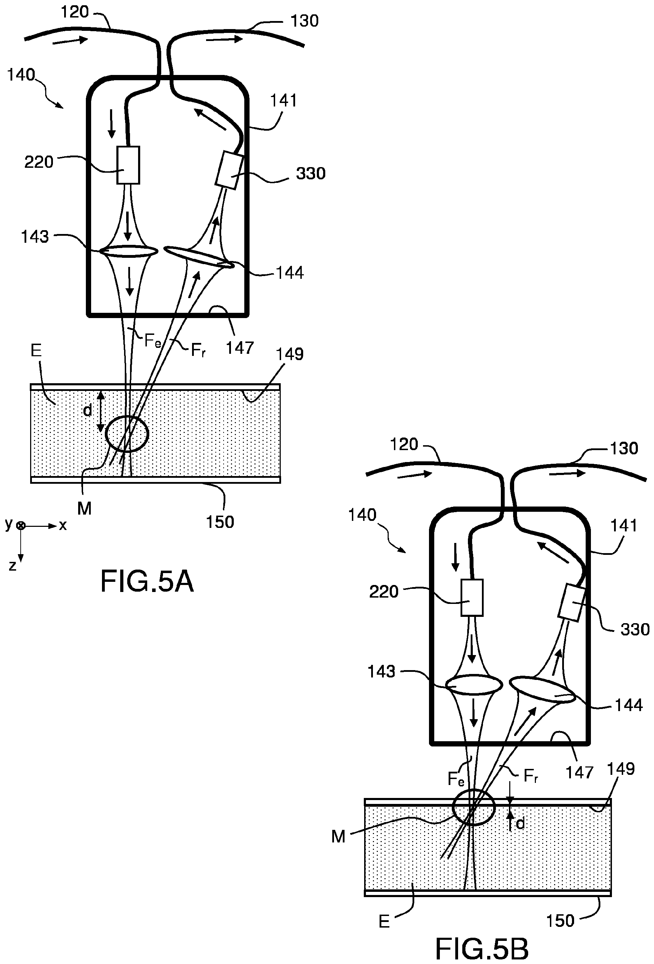

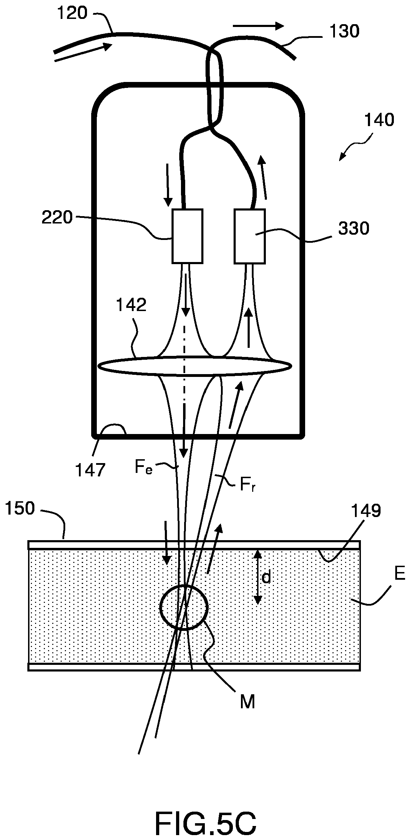

Les figures 5A, 5B et 5C représentent des exemples d'une sonde de mesure 100 d'un dispositif selon la présente description, dans lesquels le tube de confinement comprend au moins une portion horizontale ou faiblement inclinée (inclinaison inférieure à ± 20°) à l'intérieur de la sonde de mesure. Il peut s'agir d'un tube droit horizontal, comme représenté sur les figures 4A à 4D, ou d'un tube de confinement débouchant sur une paroi inférieure de l'enceinte de la sonde de mesure mais qui présente un tronçon horizontal ou faiblement inclinée.

Dans cette configuration, il n'est plus nécessaire de prévoir un élément de déflexion pour la tête de mesure optique 140. Autrement dit, le tube de confinement 150, dont seule la portion centrale est représentée ici, est situé en-dessous de la tête de mesure optique 140, c'est-à-dire en regard des optiques de focalisation 143 et de collection 144.

Ainsi, dans l'exemple des figures 5A et 5B, les éléments de la tête de mesure optique sont similaires à ceux des figures 3A et 3B à la différence près qu'il n'y a pas d'élément de déflexion 148.

Plus précisément, comme représenté par les flèches sur la figure 5A, le système de focalisation 143 focalise le faisceau d'éclairage Fe vers une zone de mesure M du tube de confinement 150. Au point de focalisation du faisceau d'éclairage Fe dans l'échantillon de liquide E, la lumière reçue par l'échantillon est diffusée par les particules dispersées dans l'échantillon liquide, que ce soit une diffusion dite quasi-élastique de la lumière ou une diffusion inélastique par exemple par effet Raman. Le faisceau de lumière rétrodiffusée Fr est défini par le faisceau de lumière rétrodiffusée collecté par l'optique de collection 144. Il est possible ainsi en agençant les positions relatives des optiques d'éclairage 143 et de collection 144 ainsi que leurs axes optiques de régler l'angle entre le faisceau d'éclairage et le faisceau de lumière rétrodiffusée. Ainsi dans l'exemple des figures 5A et 5B comme dans l'exemple des figures 3A et 3B, les axes optiques des optiques d'éclairage 143 et de collection 144 présentent un angle non nul permettant d'analyser la lumière rétrodiffusée dans une direction non colinéaire avec la direction du faisceau d'éclairage.

Comme dans l'exemple précédent, la tête optique peut comprendre un séparateur sélectif en longueur d'onde pour la séparation des faisceaux d'éclairage et rétrodiffusé dans le cas d'analyse de la diffusion avec changement de longueur d'onde (non représenté sur les figures).

Dans un ou plusieurs exemples de réalisation, on peut chercher à ajuster la distance de travail entre la zone de mesure M (où est focalisé le faisceau d'éclairage Fe dans l'échantillon de liquide E), notamment pour tenir compte de la turbidité de la solution, comme cela a été expliqué précédemment. Pour cela, les optiques de focalisation 143 et de collection 144 peuvent comprendre des lentilles à focale variable, par exemple des lentilles liquides à focale variable commandés électriquement, commercialisées par les sociétés Varioptic© ou Optotune©. Dans d'autres exemples de réalisation, l'ajustement de la distance de travail d entre la zone de mesure M et la paroi intérieure 149 du tube de confinement 150 peut être obtenu au moyen de microsystèmes électromécaniques, ou MEMS (abréviation de l'expression anglo-saxonne « Microelectromechanical systems ») par modification des angles de déflexion individuels.

Les figures 5A et 5B illustrent ainsi deux exemples d'emplacements différents de la zone de mesure M. Dans l'exemple de la figure 5A, la zone de mesure M est positionnée de façon relativement centrale au sein du tube de confinement 150, à une distance d de la paroi intérieure 149 du tube de confinement 150. Dans ce cas, la focale de l'optique de focalisation 143 est choisie de manière à ce que le point de focalisation dans la zone de mesure M soit relativement au centre du tube de confinement. Au contraire, dans l'exemple de la figure 5B, la zone de mesure M est proche de la paroi intérieure 149 du tube de confinement 150. La focale de l'optique de collection 144 est adaptée à la distance de travail d choisie. L'angle formé par les deux faisceaux Fe et Fr peut alors être recalculé par l'unité de traitement 400.

La figure 5C illustre une variante des figures 5A et 5B dans laquelle l'optique de focalisation et l'optique de collection sont formées par une optique commune 142, les autres éléments étant inchangés. Ainsi, comme dans l'exemple de la figure 3C, l'optique commune 142 assure à la fois la focalisation du faisceau d'éclairage Fe et la collection du faisceau de lumière rétrodiffusée Fr. Dans l'exemple de la figure 5C, les éléments de la tête de mesure optique sont donc similaires à ceux de la figure 3C à la différence près qu'il n'y a pas d'élément de déflexion 148.

Notamment, les têtes optiques d'émission 220 et de réception 330 sont agencées de telle sorte que les faisceaux Fe d'éclairage et Fr de lumière rétrodiffusée sont incidents de façon décalée sur l'optique commune 142, l'un des deux faisceaux étant incident par exemple sur l'axe optique de l'optique commune 142 et l'autre excentré. Cette configuration permet de détecter, avec une optique commune 142, un faisceau Fr de lumière rétrodiffusée non colinéaire avec le faisceau d'éclairage.

Le dispositif de caractérisation qui vient d'être décrit peut être mis en oeuvre de la façon suivante:
- immersion de la sonde de mesure 100 dans le réacteur 20 contenant le milieu liquide 30 dans lequel plusieurs réactants réagissent ensemble ;
- introduction et mise en confinement d'un échantillon E du milieu liquide 30 dans le tube de confinement 150, soit par rotation de la sonde de mesure, soit par aspiration ;
- émission d'un faisceau d'éclairage Fe et focalisation de ce faisceau d'éclairage vers une zone de mesure M du tube de confinement 150 ;
- détection d'un faisceau de lumière rétrodiffusée Fr par les particules de l'échantillon de liquide E et transmission à l'unité de traitement 400;
- traitement, par l'unité de traitement 400, du faisceau de lumière rétrodiffusée Fr et caractérisation des particules, par exemple par leur taille et/ou leur composition;
- libération de l'échantillon de liquide E dans le milieu.

Après l'étape de libération de l'échantillon E, un nouvel échantillon E' peut être introduit dans le tube de confinement puis mis en confinement et caractérisé suivant les étapes énoncées précédemment. Une pluralité de nouveaux échantillons peuvent être ainsi caractérisés les uns à la suite des autres jusqu'à obtenir les caractéristiques souhaitées.

Quels que soient les exemples de réalisation, le dispositif de caractérisation selon la présente description a l'avantage d'être compact et de présenter un encombrement réduit (typiquement un volume présentent une dimension latérale inférieure à 30 mm et une dimension en hauteur inférieure à 80 mm). Il présente en outre l'avantage de permettre la caractérisation d'un échantillon à l'intérieur du réacteur, sans qu'aucun prélèvement hors du réacteur ne soit nécessaire et tout en prévenant tout contact de la tête de mesure optique avec le milieu liquide.

Par ailleurs, la caractérisation des particules par diffusion de la lumière comme cela vient d'être décrit peut être couplée avec d'autres caractérisations, comme par exemple la température, la viscosité, l'imagerie, etc. au moyens de dispositifs spécifiques.

Bien que décrite à travers un certain nombre d'exemples de réalisation détaillés, les dispositifs et procédés de caractérisation des particules dispersées dans un milieu liquide selon la présente description, comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Dispositif de caractérisation de particules dispersées dans un milieu liquide (30) comprenant :
- une source d'émission lumineuse fibrée (200);
- un détecteur optique fibré (300);
- une sonde de mesure (100) destinée à être plongée de façon hermétique dans le milieu liquide (30) et comprenant:
o un tube de confinement (150) destiné à être agencé à l'intérieur de ladite sonde de mesure et à traverser de façon étanche au moins une paroi de la sonde (100) pour recevoir, par une extrémité, un échantillon (E) du milieu liquide;
o une tête de mesure optique (140) destinée à être agencée à l'intérieur de ladite sonde de mesure, comprenant une optique de focalisation (143) pour la focalisation dans le tube de confinement (150) d'un faisceau lumineux d'éclairage (Fe) en provenance de la source d'émission lumineuse fibrée (200) et une optique de collection (144) pour la collection vers le détecteur optique fibré (300) d'un faisceau de lumière rétrodiffusée (Fr) par les particules dispersées dans le tube de confinement (150);
- une unité de traitement (400) adaptée pour la caractérisation des particules à partir du faisceau de lumière rétrodiffusée mesuré par le détecteur optique (300).

2. Dispositif de caractérisation selon la revendication 1, dans lequel le tube de confinement (150) traverse une paroi inférieure (112) de la sonde de mesure (100) de façon sensiblement verticale.

3. Dispositif de caractérisation selon la revendication 2, dans lequel la tête de mesure optique (140) comprend un élément de déflexion (148) du faisceau d'éclairage (Fe) vers le tube de confinement (150) et du faisceau de lumière rétrodiffusée (Fr) vers l'optique de collection (144).

4. Dispositif de caractérisation selon la revendication 3, dans lequel l'élément de déflexion (148) est mobile, permettant l'ajustement de la distance de focalisation du faisceau d'éclairage (Fe) dans le tube de confinement (150).

5. Dispositif de caractérisation selon l'une quelconque des revendications précédentes, comprenant en outre un dispositif d'aspiration contrôlée (160), adapté pour aspirer l'échantillon de milieu liquide (E) dans le tube de confinement (150) et évacuer l'échantillon de milieu liquide du tube de confinement.

6. Dispositif de caractérisation selon la revendication 1, dans lequel le tube de confinement (150) traverse une paroi latérale (114) de la sonde de mesure (140) de façon étanche par ses deux extrémités (156, 158).

7. Dispositif de caractérisation selon l'une quelconque des revendications précédentes, dans lequel l'optique de focalisation et l'optique de collection sont formées d'une même optique (142), adaptée pour recevoir les faisceaux d'éclairage et de lumière rétro diffusée.

8. Dispositif de caractérisation selon l'une quelconque des revendications précédentes, dans lequel, en fonctionnement, le faisceau de lumière rétrodiffusée et le faisceau d'éclairage sont non colinéaires.

9. Dispositif de caractérisation selon l'une quelconque des revendications précédentes, dans lequel l'optique de focalisation et/ou l'optique de collection comprennent une lentille à focale variable permettant l'ajustement de la distance de focalisation du faisceau d'éclairage dans le tube de confinement.

10. Procédé de caractérisation de particules dispersées dans un milieu liquide (30) au moyen d'un dispositif de caractérisation (10) selon l'une quelconque des revendications précédentes, comprenant les étapes suivantes:
(a1) immersion de la sonde de mesure (140) dans le milieu liquide (30);
(a2) introduction d'un échantillon (E) du milieu liquide à l'intérieur du tube de confinement (150);
(a3) focalisation d'un faisceau d'éclairage (Fe) émis par la source d'émission lumineuse (200) dans l'échantillon;
(a4) détection du faisceau de lumière rétrodiffusée (Fr) au moyen du détecteur optique (300) et caractérisation des particules; et
(a5) libération de l'échantillon (E) dans le milieu liquide (30).

11. Procédé de caractérisation selon la revendication 10, dans lequel l'étape (a4) de détection du faisceau de lumière rétrodiffusée (Fr) et de caractérisation des particules comprend l'analyse dynamique de la lumière rétrodiffusée (DLS).

12. Procédé de caractérisation selon l'une quelconque des revendications 10 ou 11, dans lequel l'étape (a4) de détection du faisceau de lumière rétrodiffusée (Fr) et de caractérisation des particules comprend l'analyse statique de la lumière rétrodiffusée à une longueur d'onde différente de la longueur d'onde du faisceau d'éclairage.

13. Procédé de caractérisation selon l'une quelconque des revendications 10 à 12, dans lequel l'opération (a2) d'introduction de l'échantillon (E) du milieu liquide comprend l'aspiration contrôlée du milieu liquide (30) dans le tube de confinement (150), au moyen d'un dispositif d'aspiration (160).

14. Procédé de caractérisation selon l'une quelconque des revendications 10 à 12, dans lequel, lorsque le tube de confinement traverse de manière étanche une paroi latérale de la sonde de mesure par ses deux extrémités, l'opération (a2) d'introduction de l'échantillon du milieu liquide comprend:
- la rotation de la sonde de mesure (100) dans une première position de façon à ce que le tube de confinement (150) se trouve dans une direction sensiblement parallèle à un flux dans le milieu liquide (30), permettant le remplissage du tube de confinement; et
- une fois le tube de confinement rempli, la rotation de la sonde de mesure (100) dans une deuxième position de façon à ce que le tube de confinement (150) se trouve dans une direction sensiblement perpendiculaire au flux dans le milieu liquide.

15. Procédé de caractérisation selon l'une quelconque des revendications 10 à 14, comprenant en outre l'adaptation de la distance de focalisation du faisceau d'éclairage (Fe) dans l'échantillon en fonction de la concentration en particules du milieu liquide et/ou de leur absorption.

## Patentansprüche

1. Vorrichtung zum Charakterisieren von Partikeln, die in einem flüssigen Medium (30) dispergiert sind, welche Folgendes umfasst:
- eine faserförmige Lichtemissionsquelle (200);
- einen faseroptischen Sensor (300);
- eine Messsonde (100), welche dafür bestimmt ist, auf hermetische Weise in das flüssige Medium (30) getaucht zu werden und welche Folgendes umfasst:
o ein Umschließungsrohr (150), das dafür bestimmt ist, im Inneren dieser Messsonde angeordnet zu werden und auf dichte Weise durch mindestens eine Wand der Sonde (100) durchzugehen, um mit einem Ende eine Probe (E) des flüssigen Mediums zu empfangen;
∘ einen optischen Messkopf (140) der dafür bestimmt ist, im Inneren dieser Messsonde angeordnet zu sein, welcher eine optische Fokussierungseinrichtung (143), um in dem Umschließungsrohr (150) einen Beleuchtungsstrahl (Fe) zu fokussieren, welcher von der faserförmigen Lichtemissionsquelle (200) stammt, und eine lichtsammelnde Optik (144) zum Erfassen, in Richtung zum faseroptischen Sensor (300), eines rückgestreuten Lichtstrahls (Fr) über die in dem Umschließungsrohr (150) dispergierten Partikel umfasst;
- eine Behandlungseinheit (400), die für die Charakterisierung der Partikel ausgehend von dem rückgestreuten Lichtstrahl, der von der optischen Sonde (300) gemessen wird, geeignet ist.

2. Vorrichtung zum Charakterisieren nach Anspruch 1, in welcher das Umschließungsrohr (150) eine untere Wand (112) der Messsonde (100) in einer im Wesentlichen vertikalen Weise durchquert.

3. Vorrichtung zum Charakterisieren nach Anspruch 2, in welcher der optische Messkopf (140) ein Element für die Ablenkung (148) des Beleuchtungsstrahls (Fe) in Richtung zum Umschließungsrohr (150) und des rückgestreuten Lichtstrahls (Fr) in Richtung zur Sammeloptik (144) umfasst.

4. Vorrichtung zum Charakterisieren nach Anspruch 3, in welcher das Element für die Ablenkung (148) beweglich ist und die Einstellung des Fokussierungsabstands des Beleuchtungsstrahls (Fe) im Umschließungsrohr (150) ermöglicht.

5. Vorrichtung zum Charakterisieren nach einem der vorangegangenen Ansprüche, welche außerdem eine Vorrichtung zum kontrollierten Absaugen (160) umfasst, die dafür geeignet ist, die Probe aus dem flüssigen Medium (E) in das Umschließungsrohr (150) zu saugen und die Probe des flüssigen Mediums aus dem Umschließungsrohr abzulassen.

6. Vorrichtung zum Charakterisieren nach Anspruch 1, in welcher das Umschließungsrohr (150) eine seitliche Wand (114) der Messsonde (140) auf dichte Weise mit seinen beiden Enden (156, 158) durchquert.

7. Vorrichtung zum Charakterisieren nach einem der vorangegangenen Ansprüche, in welcher die Fokussierungsoptik und die Sammeloptik von derselben Optik (142) gebildet sind, welche dafür geeignet ist, die Beleuchtungsstrahlen und rückgestreutes Licht zu empfangen.

8. Vorrichtung zum Charakterisieren nach einem der vorangegangenen Ansprüche, in welcher während des Betriebs der rückgestreute Lichtstrahl und der Beleuchtungsstrahl nicht kollinear sind.

9. Vorrichtung zum Charakterisieren nach einem der vorangegangenen Ansprüche, in welcher die Fokussierungsoptik und/oder die Sammeloptik eine Linse mit variablem Fokus umfassen, welche die Einstellung des Fokussierungsabstands des Beleuchtungsstrahls im Umschließungsrohr ermöglicht.

10. Verfahren zum Charakterisieren von Partikeln, die in einem flüssigen Medium (30) dispergiert sind, mittels einer Vorrichtung zum Charakterisieren (10) nach einem der vorangegangenen Ansprüche, welches die folgenden Schritte umfasst:
(a1) Eintauchen der Messsonde (140) in das flüssige Medium (30);
(a2) Einführen einer Probe (E) des flüssigen Mediums in das Innere des Umschließungsrohres (150);
(a3) Fokussieren eines Beleuchtungsstrahls (Fe), der von der Lichtemissionsquelle (200) in die Probe ausgestrahlt wird;
(a4) Erkennen des rückgestreuten Lichtstrahls (Fr) mittels des optischen Sensors (300) und Charakterisieren der Partikel; und
(a5) Freisetzen der Probe (E) in dem flüssigen Medium (30).

11. Verfahren zum Charakterisieren nach Anspruch 10, bei welchem der Schritt (a4) des Erkennens des rückgestreuten Lichtstrahls (Fr) und des Charakterisierens der Partikel die dynamische Analyse des rückgestreuten Lichts (DLS) umfasst.

12. Verfahren zum Charakterisieren nach einem der Ansprüche 10 oder 11, bei welchem der Schritt (a4) des Erkennens des rückgestreuten Lichtstrahls (Fr) und des Charakterisierens der Partikel die statische Analyse des rückgestreuten Lichts auf einer anderen Wellenlänge als die Wellenlänge des Beleuchtungsstrahls umfasst.

13. Verfahren zum Charakterisieren nach einem der Ansprüche 10 bis 12, bei welchem der Vorgang (a2) des Einführens der Probe (E) des flüssigen Mediums das kontrollierte Absaugen von dem flüssigen Medium (30) in das Umschließungsrohr (150) mittels einer Absaugvorrichtung (160) umfasst.

14. Verfahren zum Charakterisieren nach einem der Ansprüche 10 bis 12, bei welchem, während das Umschließungsrohr mit seinen beiden Enden auf dichte Weise eine seitliche Wand der Messsonde durchquert, der Vorgang (a2) des Einführens der Probe des flüssigen Mediums Folgendes umfasst:
- Drehen der Messsonde (100) in eine erste Position auf eine Weise, dass sich das Umschließungsrohr (150) in einer Richtung befindet, die im Wesentlichen parallel zu einem Fluss in dem flüssigen Medium (30) ist, was das Füllen des Umschließungsrohrs ermöglicht; und
- sobald das Umschließungsrohr gefüllt ist, Drehen der Messsonde (100) in eine zweite Position auf eine Weise, dass sich das Umschließungsrohr (150) in einer Richtung befindet, die im Wesentlichen senkrecht zum Fluss in dem flüssigen Medium ist.

15. Verfahren zum Charakterisieren nach einem der Ansprüche 10 bis 14, welches außerdem die Anpassung des Fokussierungsabstands des Beleuchtungsstrahls (Fe) in der Probe entsprechend der Konzentration der Partikel des flüssigen Mediums und/oder deren Absorption umfasst.

## Claims

1. A device for characterising particles dispersed in a liquid medium (30), comprising:
- a fibred light-emission source (200);
- a fibred optical detector (300);
- a measuring sensor (100) intended to be immersed hermetically in the liquid medium (30) and comprising:
o a confinement tube (150) intended to be arranged inside said measuring sensor and to sealingly pass through at least one wall of the sensor (100) in order to receive, through one end, a sample (E) of the liquid medium;
o an optical measuring head (140) intended to be arranged inside said measuring sensor, comprising a focusing optic (143) for focusing in the confinement tube (150) an illuminating light beam (Fe) coming from the fibred light emission source (200) and a collection optic (144) for the collection towards the fibred optical detector (300) of a light beam (Fr) backscattered by the particles dispersed in the confinement tube (150);
- a processing unit (400) suitable for characterising the particles using the backscattered light beam measured by the optical detector (300).

2. The characterisation device according to claim 1, wherein the confinement tube (150) passes through a bottom wall (112) of the measuring sensor (100) substantially vertically.

3. The characterisation device according to claim 2, wherein the optical measuring head (140) comprises an element (148) for deflecting the illuminating beam (Fe) towards the confinement tube (150) and the backscattered light beam (Fr) towards the collection optic (144).

4. The characterisation device according to claim 3, wherein the deflection element (148) is movable, allowing adjustment of the focusing distance of the illuminating beam (Fe) in the confinement tube (150).

5. The characterisation device according to any of the preceding claims, further comprising a controlled aspiration device (160), suitable for aspirating the sample of liquid medium (E) in the confinement tube (150) and discharging the sample of liquid medium in the confinement tube.

6. The characterisation device according to claim 1, wherein the confinement tube (150) passes through a lateral wall (114) of the measuring sensor (140) sealingly by its two ends (156, 158).

7. The characterisation device according to any of the preceding claims, wherein the focusing optic and the collection optic are formed by the same optic (142), suitable for receiving the illuminating beam and the backscattered light beam.

8. The characterisation device according to any of the preceding claims, wherein, in operation, the backscattered light beam and the illuminating beam are non-collinear.

9. The characterisation device according to any of the preceding claims, wherein the focusing optic and/or the collection optic comprise a variable-focus lens allowing adjustment of the focusing distance of the illuminating beam in the confinement tube.

10. A method for characterising particles dispersed in a liquid medium (30) by means of a characterisation device (10) according to any of the preceding claims, comprising the following steps:
(a1) immersion of the measuring sensor (140) in the liquid medium (30);
(a2) introduction of a sample (E) of the liquid medium in the confinement tube (150);
(a3) focusing of an illuminating beam (Fe) emitted by the light emission source (200) in the sample;
(a4) detection of the backscattered light beam (Fr) by means of the optical detector (300) and characterisation of the particles; and
(a5) the release of the sample (E) in the liquid medium (30).

11. The characterisation method according to claim 10, wherein the step (a4) of detection of the backscattered light beam (Fr) and of characterisation of the particles comprises the dynamic analysis of the backscattered light (DLS).

12. The characterisation method according to either claim 10 or claim 11, wherein the step (a4) of detection of the backscattered light beam (Fr) and of characterisation of the particles comprises the static analysis of the backscattered light at a wavelength different from the wavelength of the illuminating beam.

13. The characterisation method according to any of claims 10 to 12, wherein the operation (a2) of introduction of the sample (E) of the liquid medium comprises the controlled aspiration of the liquid medium (30) in the confinement tube (150), by means of an aspiration device (160).

14. The characterisation method according to any of claims 10 to 12, wherein, when the confinement tube sealingly passes through a lateral wall of the measuring sensor by its two ends, the operation (a2) of introduction of the sample of the liquid medium comprises:
- the rotation of the measuring sensor (100) into a first position so that the confinement tube (150) is situated in a direction substantially parallel to a flow in the liquid medium (30), allowing filling of the confinement tube; and
- once the confinement tube is filled, the rotation of the measuring sensor (100) into a second position so that the confinement tube (150) is situated in a direction substantially perpendicular to the flow in the liquid medium.

15. The characterisation method according to any of claims 10 to 14, further comprising the adaptation of the focusing distance of the illuminating beam (Fe) in the sample according to the concentration of particles in the liquid medium and/or the absorption thereof.
